# EUROPÄISCHE PATENTANMELDUNG

(11) **EP 1 418 289 A2**
(43) Veröffentlichungstag der Anmeldung: **12.05.2004**
(21) Anmeldenummer: 03025539.2
(22) Anmeldetag: 07.11.2003
(51) Int. Cl.: E04F 11/18, F16B 7/02, F16B 7/18

(54) **Klemmadapter für Rohr, Spannmittel hierfür, Verbindungsmittel mit Klemmadapter und Spannmittel, damit hergestellte Rohrverbindung, sowie Verbindung von zwei Vollprofilen**

(30) Priorität: 11.11.2002 DE 10252673
(71) Anmelder: Glockner, Dieter, 91126 Schwabach (DE)
(72) Erfinder: Glockner, Dieter, 91126 Schwabach (DE)
(74) Vertreter: Wolff, Felix, Dr.

(57) **Zusammenfassung**

Die Erfindung betrifft einen Klemmadapter (1) mit ein einem äußeren Umfang (5), der den Abmessungen der Innenseite (2) eines Rohres (3) entspricht, einer ersten und zweiten Stirnfläche (6,7), einer Bohrung (8), die sich zwischen den Stirnflächen (6,7) erstreckt und die ein erstes und ein zweites Ende (11,12) aufweist und einer Ausnehmung (9), die sich zwischen den Stirnflächen (6,7) und senkrecht dazu zwischen dem äußeren Umfang (5) und der Bohrung (8) erstreckt, wobei die Bohrung (8) durch ein Spannmittel (10), das durch die Bohrung (8) steckbar ist und das mit einer Stirnfläche (6,7) und dem gegenüberliegenden Ende (11,12) der Bohrung (8) zusammenwirkt, so aufweitbar ist, daß sich der äußere Umfang (5) des Adapters form- und/oder kraftschlüssig mit der Innenseite (2) des Rohres (3) reversibel verbindet. Alternativ weist der Klemmadapter eine zweite Bohrung auf, die sich quer zur ersten Bohrung erstreckt, wobei diese zweite Bohrung durch ein Spannmittel, das in diese Bohrung steckbar ist und mit ihr zusammenwirkt, so aufweitbar ist, daß sich der äußere Umfang des Adapters form- und/oder kraftschlüssig mit der Innenseite des Rohres reversibel verbindet. Die Erfindung betrifft auch ein Spannmittel für den Klemmadapter, ein Verbindungsmittel umfassend den Klemmadapter und das Spannmittel sowie eine Rohrverbindung mit diesem Verbindungsmittel.

Ferner betrifft die Erfindung eine Verbindung von zwei Vollprofilen, wobei jeweils ein Adapter auf die Stirnfläche jeweils eines Vollprofiles montiert wird, der ein Gewinde aufweist und die Gewinde mit einem Verbindungsmittel miteinander verbindbar sind.

## Beschreibung

Die vorliegende Erfindung betrifft einen Klemmadapter, ein Spannmittel, ein Verbindungsmittel sowie eine Rohr- bzw. Vollprofilverbindung.

Im Metallbau, insbesondere beim Geländerbau müssen Rohre beispielsweise aus Edelstahl oftmals miteinander verbunden werden. Diese Verbindung wurde in der Vergangenheit vielfach durch Stoffschluß, beispielsweise durch Schweißen, erzeugt. Schweißen ist jedoch ein vergleichsweise aufwendiges Verfahren, das darüber hinaus den Nachteil hat, daß die Schweißnaht in der Regel immer sichtbar bleibt und daß die Verbindung nur sehr aufwendig wieder lösbar ist.

Es sind auch weitere Verbinder bekannt, die jedoch sehr teuer und aufwendig sind.

Der vorliegenden Erfindung liegt deshalb die Aufgabe zugrunde, Mittel für eine Rohrverbindung bereitzustellen, die die Nachteile des Standes der Technik nicht aufweist.

Die Aufgabe wird durch einen Klemmadapter gemäß den Ansprüchen 1 und 2, einem Spannmittel gemäß Anspruch 8, einem Verbindungsmittel gemäß Anspruch 15, einer Rohrverbindung gemäß Anspruch 16 sowie einer Verbindung von zwei Vollprofilen gemäß Anspruch 18 gelöst.

Bevorzugte Ausführungsformen sind in den Unteransprüchen beansprucht.

Erfindungsgemäß wird ein Klemmadapter zur Verfügung gestellt, dessen Umfang mit der Innenseite eines Rohres form- und/oder kraftschlüssig lösbar verbindbar ist.

Ein Rohr im Sinne der Erfindung ist jedes beliebige Rohr aus jedem beliebigen Werkstoff. Vorzugsweise weist das Rohr einen runden, quadratischen oder rechteckigen Querschnitt auf.

Weiterhin erfindungsgemäß weist der Adapter eine Ausnehmung auf. In einer bevorzugten Ausführungsform der vorliegenden Erfindung ist in dieser Ausnehmung ein Steg vorgesehen, der gegebenenfalls als Fertigungshilfe benötigt wird. Dieser Steg stellt eine Sollbruchstelle dar, die aufplatzt, sobald der Klemmadapter aufgeweitet wird.

Weiterhin bevorzugt weist der Klemmadapter an seinem Umfang und in seiner Längsrichtung zumindestens einen, vorzugsweise jedoch drei Schlitze auf, so daß die Bohrung des Adapters, die sich erfindungsgemäß zwischen dessen beiden Stirnflächen erstreckt, leichter aufweitbar ist.

Weiterhin bevorzugt ist am Umfang des Adapters eine Nut, vorzugsweise eine Schrägnut vorgesehen, in die beispielsweise ein Ohrring eingelegt werden kann, der als Rutschhemmung beim Aufweiten des Klemmadapters dient.

In einer besonders bevorzugten Ausführungsform der vorliegenden Erfindung ist die Bohrung, in die das Spannmittel gesteckt wird, zumindest an einem Ende, vorzugsweise jedoch an beiden Enden konisch gestaltet.

Der erfindungsgemäße Klemmadapter kann auf jede beliebige Weise gefertigt werden, vorzugsweise ist der Adapter jedoch im wesentlichen ein Stranggußteil, das entsprechend abgelängt wird. Weiterhin bevorzugt kann der Adapter ein Spritzgußteil oder ein Kunststoffteil sein.

Der erfindungsgemäße Klemmadapter ist leicht und einfach herstellbar. Er kann in ein Rohr beliebigen Querschnitts eingefügt werden und geht nach Verspannen mit einem Spannmittel mit der Innenwand des Rohres eine sehr belastbare formund/oder kraftschlüssige Verbindung ein.

Ein weiterer Gegenstand der vorliegenden Erfindung ist ein Spannmittel gemäß Patentanspruch 8. Dieses Spannmittel weist erfindungsgemäß ein Mittelteil auf, das zumindestens in Teilbereichen über ein Gewinde verfügt und das an seinem einen Ende ein Mittel aufweist, das die Bohrung des Klemmadapters, in die das Spannmittel eingeführt wird, aufweitet und das an seinem anderen Ende ein Widerlager hat, das beispielsweise mit einer der Stirnflächen des Klemmadapters zusammenwirkt, wobei das Mittel zur Aufweitung der Bohrung und das Widerlager mit dem Mittelteil reversibel gegeneinander verspannbar sind.
Vorzugsweise ist das Mittel zum Aufweiten der Bohrung ein Konus, der vorzugsweise mit dem konischen Teil der Bohrung zusammenwirkt. Der Konus weist in Längsrichtung eine Bohrung mit einem Gewinde auf, das mit dem Gewinde des Mittelteils zusammenwirkt. Weiterhin bevorzugt ist das Widerlager eine Muffe, deren eine Stirnfläche mit einer Stirnfläche des Klemmadapters zusammenwirkt und die eine Bohrung mit einem Gewinde aufweist, das ebenfalls mit dem Gewinde des Mittelteils zusammenwirkt. Vorzugsweise ist zwischen der Muffe und dem Klemmadapter eine Unterlegscheibe angeordnet, um die Druckspannung, die auf den Klemmadapter wirkt, zu reduzieren.

In einer besonders bevorzugten Ausführungsform der vorliegenden Erfindung werden das Widerlager und das Mittelteil als ein Teil, beispielsweise eine Schraube, gefertigt.

Weiterhin bevorzugt weist das Widerlager zusätzlich einen Konus auf, der über eine Durchgangsbohrung verfügt und der mit einem weiteren konischen Teil der Bohrung des Adapters, in die das Spannmittel gesteckt wird, zusammenwirkt. Durch diese Ausführungsform der vorliegenden Erfindung kann die Bohrung des Spannadapters von zwei Seiten aufgeweitet werden, so daß sich ein besonders guter Formund/oder Kraftschluß zwischen dem Adapter und der Innenwand des Rohres ergibt.

Vorzugsweise ist das Widerlager mit einem weiteren Verbindungsstück verbindbar. Dieses Verbindungsstück kann beispielsweise eine Gewindestange sein, die in das Widerlager eingeschraubt wird und mit der letztendlich die beiden Rohrstücke miteinander verbunden werden.

Das erfindungsgemäße Spannmittel ist einfach und kostengünstig herzustellen. Es eignet sich in besonders günstiger Weise dazu, die erfindungsgemäßen Klemmadapter aufzuweiten und eine Verbindung zwischen Rohren zu ermöglichen.

Ein weiterer Gegenstand der vorliegenden Erfindung ist ein Verbindungsmittel, das zum einen den erfindungsgemäßen Klemmadapter und zum anderen das erfindungsgemäße Spannmittel aufweist.

Dieses Verbindungsmittel kann form- und/oder kraftschlüssig an der Innenseite eines Rohres angebracht werden und bietet die Möglichkeit, daran ein Verbindungsstück zu montieren, das die Verbindung zwischen zwei Rohren herstellt.

Ein weiterer Gegenstand der vorliegenden Erfindung ist eine Rohrverbindung, die aus zwei Rohren besteht, an deren Innenseite jeweils ein erfindungsgemäßes Verbindungsmittel angeordnet ist, wobei die Spannmittel durch ein Verbindungsstück miteinander verbunden werden.

Als Verbindungsstück eignet sich jedes Mittel, das mit den Klemmadaptern oder den Spannmitteln verbindbar ist, vorzugsweise ist das Verbindungsstück jedoch eine Kugelschale, eine Gewindestange, eine Kugel mit zwei Gewindestiften oder ein Spannring.

Die erfindungsgemäße Rohrverbindung ist einfach und kostengünstig herzustellen. Sie ist jederzeit beispielsweise durch einfaches Schrauben lösbar und wieder herstellbar.

Ein weiterer Gegenstand der Erfindung ist eine Verbindung von zwei Vollprofilen, bei der jeweils ein Adapter auf die Stirnseite jeweils eines Vollprofils montiert wird, der ein Gewinde aufweist. Die Gewinde von jeweils zwei Adaptern werden durch ein Verbindungsmittel miteinander verbunden.

In einer bevorzugten Ausführungsform ist dieses Verbindungsmittel eine Kugel, vorzugsweise eine Hohlkugel mit zwei Schrauben.

Die erfindungsgemäße Verbindung ist einfach, schnell und reversibel herstellbar bzw. lösbar. Die Ausführungsform mit der Kugel stellt eine besonders formschöne Variante dar, die sich beispielsweise auch für Eckverbindungen eignet.

Im folgenden wird die Erfindung anhand der **Figuren 1 - 8** erläutert. Diese Erläuterungen sind lediglich beispielhaft und schränken den allgemeinen Erfindungsgedanken nicht ein.
- **Figur 1**: zeigt ein Rohr mit einer Ausführungsform des erfindungsgemäßen Spannmittels,
- **Figur 2**: zeigt die Ausführungsform des Spannmittels gemäß Figur 1, jedoch mit 2 Konussen,
- **Figur 3**: zeigt eine andere Ausführungsform des erfindungsgemäßen Spannmittels,
- **Figur 4**: zeigt eine Rohrverbindung mit einer Kugel als Verbindungsstück,
- **Figur 5**: zeigt eine Rohrverbindung mit einem Spannring als Verbindungsstück,
- **Figur 6**: zeigt ein Verbindungsstück bestehend aus einer Vollkugel und zwei Gewindestiften,
- **Figur 7**: zeigt eine erfindungsgemäße Verbindung von zwei Vollprofilen,
- **Figur 8**: zeigt eine Rohrverbindung mit zwei Adaptern und einer Gewindehülse und

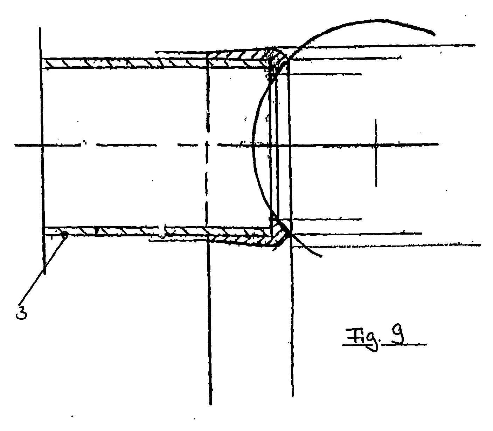

- **Figur 9**: zeigt einen Kunststoffgleitring zum Schutz der Kugel, vorzugsweise aus Kunststoff oder Edelstahl.

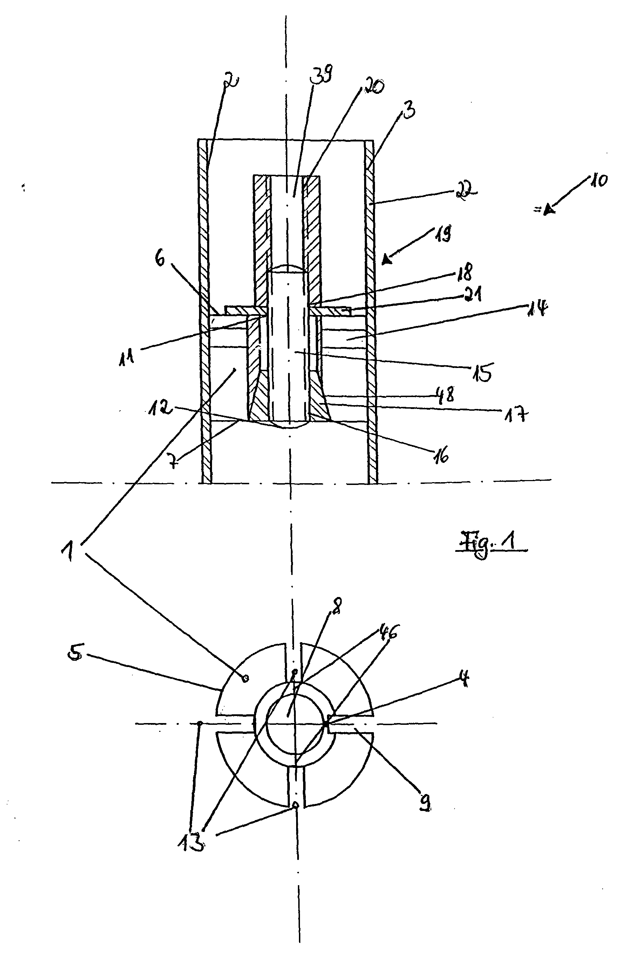

Figur 1 zeigt einen Klemmadapter 1 in einem Rohr 3. Der Umfang 5 des Klemmadapters 1 ist mit der Innenwand 2 des Rohres 3 form- und/oder kraftschlüssig verbunden. Der Adapter 1 weist eine erste und zweite Stirnfläche 6, 7 und eine Bohrung 8 auf. Des weiteren ist in dem Adapter eine Ausnehmung 9 vorgesehen, die sich in Längsrichtung des Rohres von der ersten bis zur zweiten Stirnfläche 6, 7 erstreckt und die sich radial im wesentlichen von der Bohrung 8 bis zum Umfang 5 erstreckt, wobei sich im vorliegenden Fall im Bereich der Ausnehmung noch eine Sollbruchstelle 4 befindet, die aus fertigungstechnischen Gründen dort angeordnet ist. Sobald die Bohrung 8 aufgeweitet wird, bricht die Sollbruchstelle 4. Der Fachmann erkennt, daß die Sollbruchstelle nicht vorhanden sein muß. Des weiteren weist der Adapter 3 sich in Längsrichtung des Rohres erstreckende Schlitze 13 auf. Durch diese Schlitze 13 bilden sich elastische Stege 46 aus, die die Aufweitung der Bohrung 8 und damit den Form- und/oder Kraftschluß des Adapters mit dem Rohr unterstützen. Außerdem hat der Adapter am Umfang quer zur Längsrichtung des Rohres 3 eine Schrägnut 14, die beispielsweise einen Ohrring 47 aufnehmen kann, der ein Verrutschen des Adapters beim Verpannen verhindert. Durch die Bohrung 8 wird ein Spannmittel 10 hindurchgesteckt. Das Spannmittel 10 besteht aus einem Mittelteil 15, das ein Gewinde 16 aufweist. In dem vorliegenden Fall ist das Mittel 15 eine Gewindestange. Das Mittel 15 weist an seinem einen Ende ein Mittel 17, in dem vorliegenden Fall ein Konus, auf, der, in dem er nach oben gezogen wird und mit dem konischen Teil 48 der Bohrung 8 zusammenwirkt, diese aufweitet. Das Hochziehen erfolgt durch eine Drehung der Gewindestange 15, die an dem dem Konus gegenüberliegenden Ende ein Widerlager 19 aufweist, das sich an der Stirnfläche 6 des Adapters 1 abstützt. In dem vorliegenden Fall besteht das Widerlager aus einer Unterlegscheibe 21 und einer Gewindeanschlußmuffe 22. Die Drehung der Gewindestange 15 in dem Konus 16 kann durch eine Drehung der Gewindemuffe 22 erreicht werden. Durch die Drehung der Gewindestange 15 wird der Konus 17 nach oben gezogen und weitet dadurch die Bohrung 8 auf, so daß der Umfang 5 des Adapters 1 gegen die Innenseite 2 des Rohres 3 gepreßt wird und dort in einer form- und/oder kraftschlüssigen Verbindung resultiert. Der Fachmann versteht, daß durch ein Herunterdrücken des Konus 17, was ebenfalls durch eine Drehung der Gewindestange 15, diesmal jedoch in umgekehrter Richtung, erreicht wird, die form- und/oder kraftschlüssige Verbindung wieder gelöst wird und der Adapter und das Spannmittel aus dem Rohr herausgezogen werden können. In die Anschlußmuffe 22 können Verbindungsstücke (nicht dargestellt) eingedreht werden, durch die die Verbindung mit einem weiteren Rohr, das ebenfalls den hier dargestellten Adapter nebst Spannmittel aufweist, hergestellt werden.

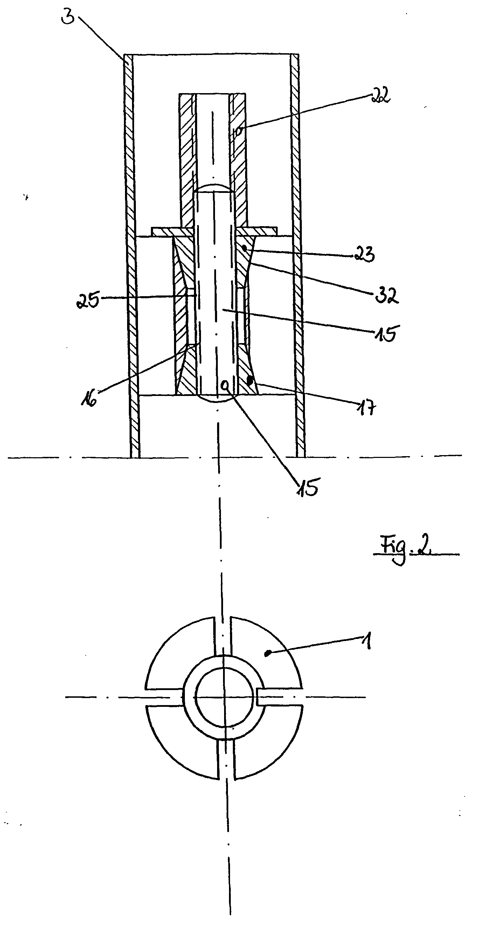

Figur 2 zeigt im wesentlichen den Adapter und das Spannmittel gemäß Figur 1, mit der Ausnahme, daß in dem vorliegenden Fall ein zusätzlicher Konus 23, dessen Umfang mit einem konischen Teil 32 der Bohrung 8 zusammenwirkt, vorgesehen ist.

Der Konus 32 weist eine Durchgangsbohrung 25 auf, so daß er nicht im Eingriff mit dem Gewinde 16 der Gewindestange 15 steht.

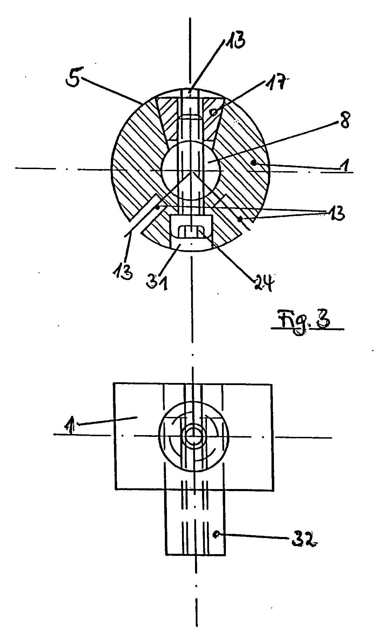

In Figur 3 ist eine weitere Ausführungsform des erfindungsgemäßen Spannmittels dargestellt. Dieses Spannmittel weist wiederum einen Adapter 1 auf, dessen Umfang 5 mit der Innenseite eines Rohres (nicht dargestellt) form- und/oder kraftschlüssig zusammenwirkt. Neben der bereits bekannten Bohrung 8 und den bereits beschriebenen Schlitzen 13 weist der vorliegende Adapter eine zusätzliche Bohrung 31 auf, die senkrecht zu der Bohrung 8 angeordnet ist. Die Bohrung 31 weist an ihrem einen Ende einen konischen Teil auf, der einen Konus 17, der mit einer Schraube 24, die in die Bohrung 31 hineingesteckt wird, zusammenwirkt. Durch Drehung der Schraube 24 wird die Bohrung 8 aufgeweitet und damit der Umfang 5 in die Innenseite des Rohres gepreßt. Des weiteren weist das vorliegende Verbindungsmittel ein Anschlußmittel 32, in dem vorliegenden Fall eine Anschlußmuffe, auf, in die wiederum ein Verbindungsstück (nicht dargestellt) eingedreht werden kann, mit dem die Verbindung zu einem weiteren Verbindungsmittel, das gemäß den in den Figuren 1 bis 3 dargestellten Ausführungsformen gefertigt ist, hergestellt werden kann.

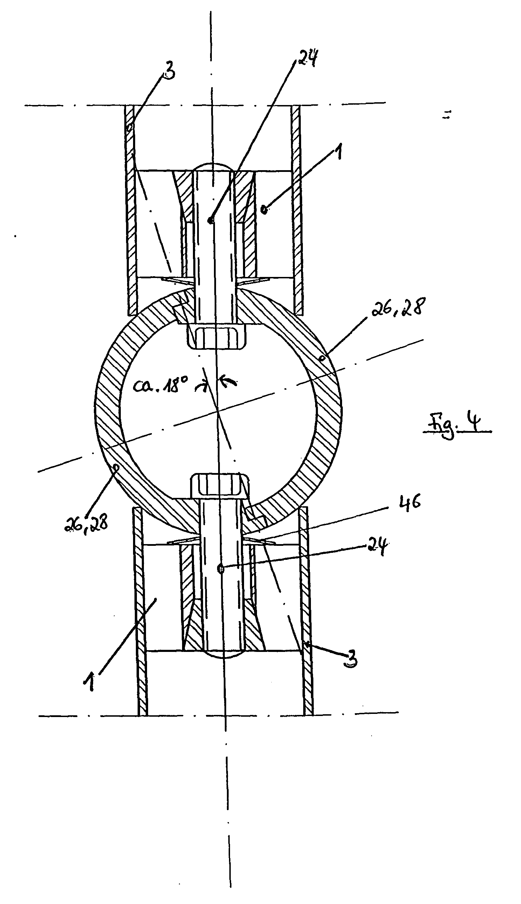

Figur 4 zeigt eine Ausführungsform einer erfindungsgemäßen Rohrverbindung. Diese Rohrverbindung besteht aus zwei Rohren 3, in die jeweils ein Adapter 1 eingespannt ist. In dem vorliegenden Fall wird die Einspannung des Adapters durch das Zusammenspiel jeweils einer Schraube 24, die sich an der Innenseite einer Kugelschale 28, die in dem vorliegenden Fall das Verbindungsstück 26 darstellt, abstützt, und eines Konus erreicht. Das Spannen der Kugel gegen das Rohr erfolgt über den Federweg der Federn 46. Durch ein Verdrehen der Kugelhälften und Verschrauben der Rohre ist ein beliebiger Winkel zwischen den Rohren zwischen 0° und 90° einstellbar. Der Fachmann erkennt, daß zwischen der Kugel und den Rohren 3 jeweils ein Gleitring, beispielsweise aus Kunststoff oder Edelstahl, angeordnet sein kann, um vorzugsweise ein Verkratzen der Kugel zu vermeiden.

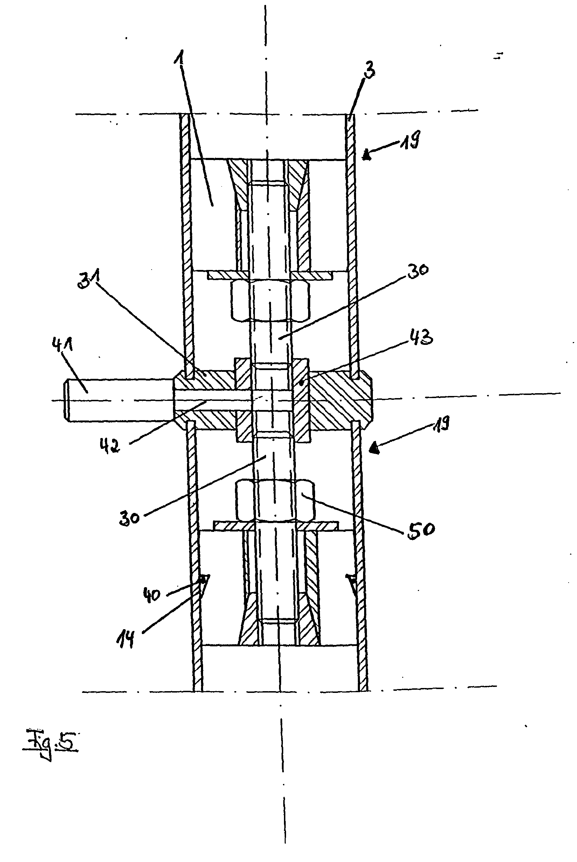

Figur 5 zeigt die Verbindung zweier Rohre mittels zweier erfindungsgemäßer Verbindungsmittel, die jeweils aus einem Klemmadapter 1 und einem Spannmittel 19 bestehen. Im vorliegenden Fall besteht das Spannmittel 19 aus einer Spannschraube 30, einem Konus 17 sowie als Widerlager aus einer Unterlegscheibe 21 und einer Mutter 50. Der Fachmann versteht, daß die eine Spannschraube ein Links-, die andere Spannschraube ein Rechtsgewinde aufweisen muß. In der Mitte zwischen den beiden Rohren ist ein Zentrier- und Spannring 31 vorgesehen, der eine Gewindemuffe 43 mit einem Rechts-/Linksgewinde aufweist. Durch Drehen des Spann- und Zentrierrings mittels des einsteckbaren Spanndorns 41 werden die beiden Rohre gegeneinander gezogen, und es entsteht eine feste Verbindung zwischen den beiden Rohren 3.

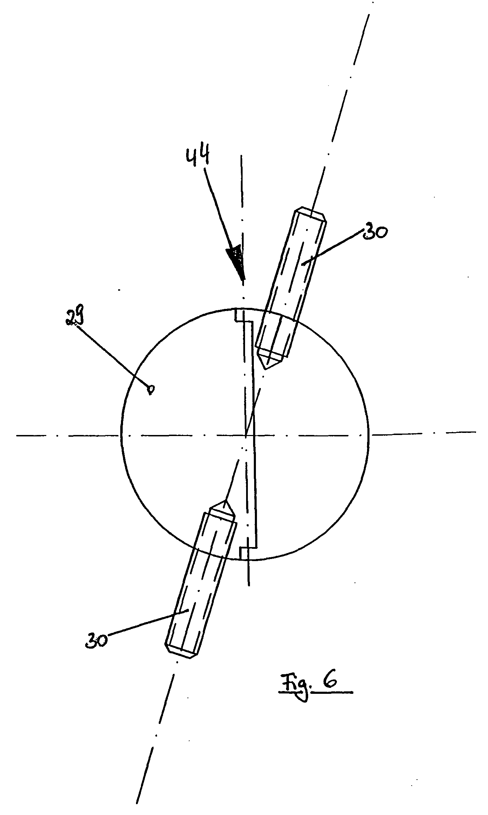

In Figur 6 ist eine weitere Ausführungsform des Verbindungsstücks dargestellt, das in dem vorliegenden Fall eine Vollkugel 29 ist, die aus zwei Halbkugeln besteht, die entlang der Linie 44 gegeneinander verdrehbar sind. In jeder Halbkugel ist jeweils ein Gewindestift 30 angeordnet, der wiederum mit beispielsweise einer Verbindungsmuffe des erfindungsgemäßen Spannmittels verbindbar ist.
Durch Verdrehen der Kugelhälften ist ein beliebiger Winkel zwischen den Rohren im Bereich von 0° bis 90° einstellbar.

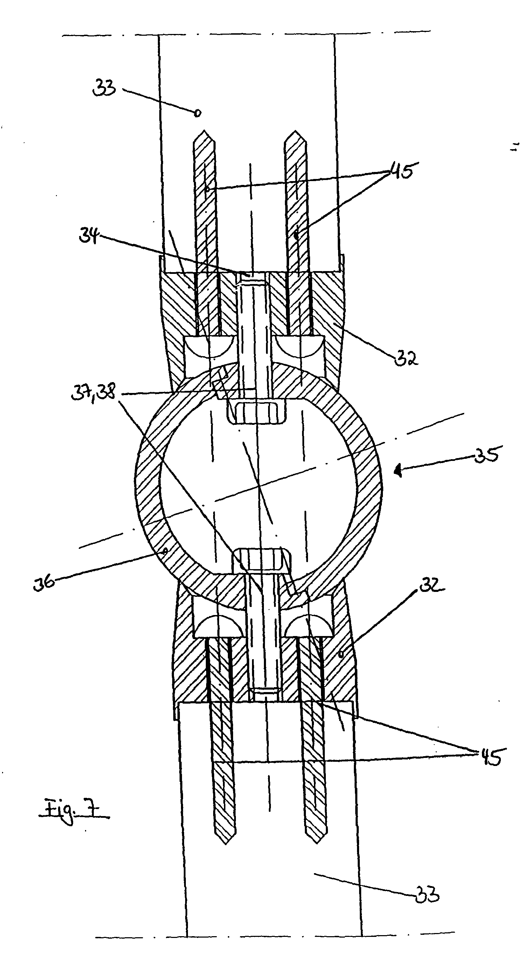

In Figur 7 ist eine Ausführungsform der erfindungsgemäßen Verbindung von zwei Vollprofilen 33, in dem vorliegenden Fall zwei hölzerne Handläufe von Geländern, dargestellt. Zwei Adapter 32 sind mittels der Schrauben 45 jeweils in die Stirnflächen der Holme 33 geschraubt. Die Adapter weisen jeweils eine Bohrung auf, die mit einem Gewinde 34 versehen ist. In dieses Gewinde 34 ist jeweils eine Schraube 37, 38 eingeschraubt, deren Kopf sich gegen die Innenseite jeweils einer Halbschale einer Hohlkugel 36 abstützt. Die Hohlkugel 36 in Zusammenwirkung mit den Schrauben 37, 38 stellen ein Verbindungsmittel 35 dar. Der Fachmann erkennt, daß die Halbschalen der Hohlkugel wiederum gegeneinander drehbar sind, so daß die beiden Holme jeden beliebigen Winkel zwischen 0° und 90° zueinander einnehmen können.

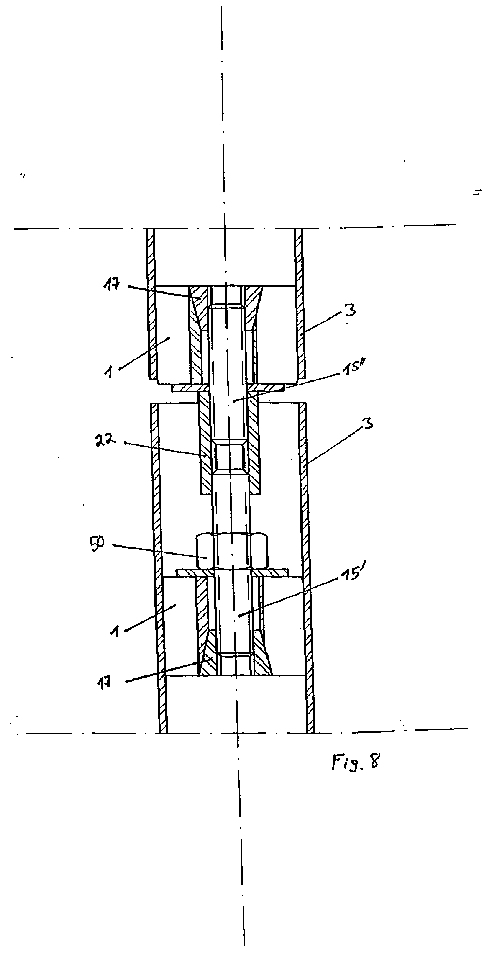

Figur 8 zeigt zwei Rohre 3 mit jeweils einem Klemmadapter 1. Der untere Adapter wird mit dem Konus 17 der Gewindestange 15' und der Mutter 50 an der Innenseite des Rohres 3 verspannt. Der obere Adapter 1 wird mit dem Konus 17 der Gewindehülse 15" sowie der Gewindemuffe 22 an der Innenseite des Rohres 3 verspannt. Der Fachmann erkennt, daß der Adapter 1 etwas aus dem Rohr heraussteht und somit als Zentrierhilfe für das andere Rohr dient. Die beiden Rohre 3 werden miteinander verspannt indem die Gewindestange 15' in die Muffe 22 hineingedreht wird.

## Patentansprüche

1. Klemmadapter (1), der mit der Innenseite (2) eines Rohres (3) form- und/oder kraftschlüssig lösbar verbindbar ist, mit
- einem äußeren Umfang (5), der im wesentlichen den Abmessungen der Innenseite (2) des Rohres (3) entspricht,
- einer ersten und zweiten Stirnfläche (6, 7),
- einer Bohrung (8), die sich zwischen den Stirnflächen (6, 7) erstreckt und die ein erstes und ein zweites Ende (11, 12) aufweist und
- einer Ausnehmung (9), die sich zwischen den Stirnflächen (6, 7) und senkrecht dazu im wesentlichen zwischen dem äußerem Umfang (5) und der Bohrung (8) erstreckt,
wobei die Bohrung (8) durch ein Spannmittel (10), das durch die Bohrung (8) steckbar ist und das mit einer Stirnfläche (6, 7) und dem gegenüberliegenden Ende (11, 12) der Bohrung (8) zusammenwirkt, so aufweitbar ist, daß sich der äußere Umfang (5) zumindest teilweise form- und/oder kraftschlüssig mit der Innenseite (2) des Rohres (3) reversibel verbindet.

2. Klemmadapter (1), der mit der Innenseite (2) eines Rohres (3) form- und/oder kraftschlüssig lösbar verbindbar ist, mit
- einem äußeren Umfang (5), der im wesentlichen den Abmessungen der Innenseite (2) des Rohres (3) entspricht,
- einer ersten und zweiten Stirnfläche (6, 7),
- einer Bohrung (8), die sich zwischen den Stirnflächen (6, 7) erstreckt,
- einer Ausnehmung (9), die sich zwischen den Stirnflächen (6, 7), senkrecht dazu im wesentlichen zwischen dem äußerem Umfang (5) und der Bohrung (8) erstreckt,
- einer Bohrung (31), die sich quer zur Bohrung (8) erstreckt und
- einem Anschlußmittel (32)
wobei die Bohrung (31) durch ein Spannmittel (10), das in die Bohrung (31) steckbar ist und mit der Bohrung (31) zusammenwirkt, so aufweitbar ist, daß sich der äußere Umfang (5) zumindest teilweise form- und/oder kraftschlüssig mit der Innenseite (2) des Rohres (3) reversibel verbindet.

3. Klemmadapter nach Anspruch 1 oder 2, **dadurch gekennzeichnet, dass** er im Bereich der Ausnehmung (9) einen Steg (4) als Sollbruchstelle aufweist.

4. Klemmadapter nach einem der voranstehenden Ansprüche, **dadurch gekennzeichnet, dass** er am Umfang sich in Längsrichtung des Rohres (3) erstreckende Schlitze (13) aufweist.

5. Klemmadapter nach einem der voranstehenden Ansprüche, **dadurch gekennzeichnet, dass** er am Umfang, senkrecht zur Längsrichtung des Rohres (3) eine Nut (14), vorzugsweise eine Schrägnut, aufweist.

6. Klemmadapter nach einem der voranstehenden Ansprüche, **dadurch gekennzeichnet, dass** die Bohrung (8, 31) zumindest an einem Ende (11, 12) konisch ausgestaltet ist.

7. Klemmadapter nach einem der voranstehenden Ansprüche, **dadurch gekennzeichnet, dass** es ein Stranggußteil ist.

8. Spannmittel (10), **dadurch gekennzeichnet, dass** es ein Mittelteil (15) aufweist, das zumindest in Teilbereichen ein Gewinde (16) aufweist und das an seinem einen Ende ein Mittel (17), das die Bohrung (8, 31) aufweistet und an seinem anderen Ende ein Widerlager (19) hat und das Mittel (17) und das Widerlager (19) mit dem Mittelteil (15) gegeneinander reversibel verspannbar sind.

9. Spannmittel nach Anspruch 8, **dadurch gekennzeichnet ,dass** das Mittel (17) ein Konus mit einer Bohrung ist, die ein Gewinde aufweist, das mit dem Gewinde (16) zusammenwirkt.

10. Spannmittel nach Anspruch 8 oder 9, **dadurch gekennzeichnet, dass** das Widerlager (17) eine Muffe (22) ist, deren eine Stirnfläche (18) mit einer Stirnfläche (6, 7) des Klemmadapters zusammenwirkt und die eine Bohrung (39) mit einem Gewinde (20) aufweist, das mit dem Gewinde (16) zusammenwirkt.

11. Spannmittel nach Anspruch 10, **dadurch gekennzeichnet, dass** das Widerlager (17) zusätzlich eine Unterlegscheibe (21) aufweist, die zwischen Muffe (22) und Klemmadapter (1) angeordnet ist.

12. Spannmittel nach Anspruch Anspruch 8 oder 9, **dadurch gekennzeichnet, dass** das Widerlager (17) und das Mittelteil (15) eine Schraube (24) ist.

13. Spannmittel nach einem der Ansprüche 8 - 12, **dadurch gekennzeichnet, daß** das Widerlager (17) zusätzlich einen Konus (23) mit einer Durchgangsbohrung (25) aufweist, der mit einem konischen Teil (32) der Bohrung (8) zusammenwirkt.

14. Spannmittel nach einem der Ansprüche 8 -13, **dadurch gekennzeichnet, dass** das Widerlager (17) mit einem weiteren Verbindungsstück (26) verbindbar ist.

15. Verbindungsmittel aufweisend einen Klemmadapter nach einem der Ansprüche 1 - 7 und ein Spannmittel nach einem der Ansprüche 8 - 14.

16. Rohrverbindung bestehend aus zwei Rohren (3), an deren Innenseite jeweils ein Verbindungsmittel nach Anspruch 15 angeordnet ist, **dadurch gekennzeichnet, dass** die Spannmittel oder die Klemmadapter durch ein Verbindungsstück (26) miteinander verbunden sind.

17. Rohrverbindung nach Anspruch 16, **dadurch gekennzeichnet, dass** das Verbindungsstück (26) eine Kugelschale (28), eine Gewindestange, eine Kugel (29) mit zwei Gewindestiften (30) oder ein Spannring (31) ist.

18. Verbindung von zwei Vollprofilen, **dadurch gekennzeichnet, dass** jeweils ein Adapter (32) auf die Stirnfläche jeweils eines Vollprofiles (33) montiert wird, der ein Gewinde (34) aufweist und die Gewinde (34) mit einem Verbindungsmittel (35) miteinander verbindbar sind.

19. Verbindung nach Anspruch 18, **dadurch gekennzeichnet, dass** das Verbindungsmittel (35) eine Kugel (36) mit zwei Schrauben (37, 38) ist,
